# DEMANDE DE BREVET EUROPEEN

(11) **EP 1 449 753 A1**
(43) Date de publication de la demande: **25.08.2004**
(21) Numéro de dépôt: 03100429.4
(22) Date de dépôt: 21.02.2003
(51) Int. Cl.: B62K 3/00, B62K 15/00

(54) **Véhicule pliable**

(71) Demandeur: Goffeau, Philippe M., 1050 Bruxelles (BE)
(72) Inventeur: Goffeau, Philippe M., 1050 Bruxelles (BE)
(74) Mandataire: Van Straaten, Joop

(57) **Abrégé**

Véhicule (28) pliable comprenant une colonne de direction pouvant se replier le long d'un marchepied (2) grâce à la présence de deux axes de repli parallèles, en outre un système de déblocage centralisé des axes de la colonne de direction et un point d'appui (8) situé près de la roue arrière (8). Ainsi, le véhicule (28) peut être repliée rapidement, simplement et de façon continue, sans qu'il soit nécessaire pour l'utilisateur (34) de se baisser. Avantageusement, le véhicule (28) peut comprendre une ou des roulettes (38) proches du point d'appui (8) permettant à l'utilisateur (34) de le transporter derrière lui.

## Description

### Domaine de l'invention

L'invention se rapporte à un véhicule comprenant un marchepied, au moins deux roues, dont au moins une roue avant et au moins une roue arrière, et une colonne de direction de l'au moins une roue avant, ou tige de maintien, la colonne de direction ou tige de maintien étant repliable selon deux axes de repliement.

### État de la technique

De tels véhicules sont bien connus dans l'état de la technique. Un exemple en est la trottinette pliable qui présente des avantages significatifs au regard des moyens de transport classiques de nos villes et qui constitue, dans son utilisation indépendante comme en combinaison avec d'autres moyens de transport, une solution fort intéressante à plusieurs problèmes. Un premier, l'encombrement des axes de transport des centres urbains, aux heures de pointe par exemple, peut être résolu par une diminution du volume des véhicules empruntant ces axes, une condition que remplissent les véhicules à deux roues comme les motos, les motocyclettes, les vélos ou les trottinettes. Néanmoins, les véhicules à deux roues classiques font face à un deuxième problème, la difficulté voire l'impossibilité de les transporter à côté de soi ou avec soi dans des zones spécifiquement conçues pour les piétons, comme les centres commerciaux ou les bureaux. Ainsi, d'une part, il est inévitable de les abandonner dans des zones de stationnement, où le risque de vol ou agissements délictueux à leur encontre est grand et ceci d'autant plus qu'ils ont une propension accrue à subir de tels actes. D'autre part, il n'est pas possible d'alterner l'utilisation de son véhicule personnel et celle d'autres moyens de transport tels le métro, pour profiter, par exemple, de la rapidité du métro sans subir la contrainte de devoir rejoindre à pied la station de métro.

Les vélos pliables et transportables existent, il est vrai, et permettraient de résoudre les problèmes décrits ci-dessus s'ils ne présentaient pas, pliés, un encombrement et un poids non négligeables, véritable obstacle à un transport confortable.

La trottinette pliable présente, quant à elle, un encombrement bien plus faible lorsqu'elle est pliée, ce qui rend son transport plus confortable. Elle constitue donc une solution attractive aux deux problèmes cités ci-dessus.

De nombreux types de trottinettes pliables et transportables sont connues dans l'état de la technique. Par exemple, la demande internationale W099/22980 décrit une trottinette pliable, dont la colonne de direction comprend deux sections, la section supérieure étant articulée à la section inférieure via un axe de rotation et la section inférieure étant articulée au marchepied via un autre axe de rotation, perpendiculaire au premier. Les deux axes perpendiculaires permettent ainsi de replier les sections de la colonne de direction le long du marchepied.

Le mécanisme de repliement de la trottinette tel que décrit dans W099/22980 est complexe. En effet, pour pouvoir replier la colonne de direction, il convient d'effectuer deux étapes. La première est le repliement de la section supérieure de ladite colonne le long de sa section inférieure et la second est le repliement de la seconde section le long du marchepied.

Le repliement de tels véhicules requiert un temps assez long, est complexe, s'effectue en deux étapes, n'est pas dépourvu du risque de se blesser ou de se salir et, enfin, nécessite de se baisser.

### Résumé de l'invention

Le but de l'invention est de fournir un véhicule trottinette pliable dont l'opération de repliement est rapide, simple, s'effectue en continu et ne présente pratiquement pas de risque de se blesser ou de se salir.

Un but supplémentaire de l'invention est de fournir un tel véhicule pliable dont l'opération de repliement ne requiert pas que la personne qui l'exécute se baisse, même si le véhicule est relativement lourd, par exemple dû à la présence de batteries.

A cette fin, le véhicule selon l'invention est caractérisé en ce que les deux axes de repliement sont substantiellement parallèles, en ce que le véhicule comprend un point d'appui situé dans le premier, le deuxième ou le quatrième quadrant de la roue arrière, et en ce que la colonne de direction ou tige de maintien comprend un système centralisé de déblocage des axes de repliement de celle-ci.

L'opération de repliement du véhicule selon l'invention est rapide, simple, s'effectue en continu et comporte moins de risques de se blesser ou se salir, grâce à la présence des deux axes de repliement substantiellement parallèles et la présence du point d'appui près de la roue arrière. L'opération de repliement est décrite plus en détail ci-dessous et met en lumière les raisons pour lesquelles les caractéristiques du véhicule selon l'invention rende possible une opération rapide, simple et continue.

Pour la clarté, est appelée ici « section inférieure de la colonne de direction » la partie de la colonne de direction liée aux deux axes de repliement. Est appelé « premier axe de repliement » l'axe de repliement de la section inférieure par rapport à la partie solidaire du marchepied. Est appelé « deuxième axe de repliement » l'autre axe de repliement. Est appelée « section supérieure de la colonne de direction » la partie de la colonne de direction articulée à la section inférieure par le deuxième axe de repliement.

Ainsi, l'opération de repliement peut être décrite comme suit. A noter tout d'abord que l'opération de repliement telle que décrite n'est pas le seul moyen de tirer profit des caractéristiques du véhicule pour la replier rapidement, simplement et de façon continue. Dans sa position initiale, la trottinette est debout, dépliée, dans une position relative au sol similaire à celle dans laquelle elle se trouve lorsqu'elle est utilisée comme moyen de transport, mais substantiellement immobile. D'abord, l'utilisateur maintient la colonne de direction par son sommet, éventuellement via un guidon, une boule ou un manche ou tout autre moyen de direction. Ensuite, il actionne le mécanisme de déblocage centralisé des deux axes de repliement. Des moyens de déblocage centralisé des axes de la colonne de direction sont présents à cet effet dans les caractéristiques du véhicule. Conjointement au déblocage des axes de repliement, l'utilisateur exerce une pression sur le point d'appui situé près de la roue arrière du véhicule. De cette façon, le véhicule subit une rotation autour d'un axe situé substantiellement près de la roue arrière de façon à ce que l'avant du véhicule se soulève, et, simultanément, la colonne de direction, toujours maintenue à son sommet par l'utilisateur, se replie. Plus spécifiquement, la section inférieure de la colonne de direction subit une rotation par rapport au premier axe dans le sens contraire au sens de rotation de la roue avant lorsque le véhicule se déplace vers l'avant, et la section supérieure subit une rotation par rapport au deuxième axe dans le sens de rotation de la roue avant lorsque le véhicule se déplace vers l'avant. Ainsi, le deuxième axe de repliement se rapproche du marchepied et le sommet de la colonne de direction se rapproche du premier axe de repliement. Le véhicule ayant subi une rotation autour de l'arrière de celui-ci et la colonne de direction étant substantiellement repliée le long du marchepied, l'utilisateur peut alors la ranger et la transporter après avoir effectué une opération de repliement rapide, simple et continue.

Une autre façon de tirer profit des caractéristiques du véhicule pour opérer un repliement rapide, simple et continu est la suivante. A partir d'une situation initiale semblable à celle décrite pour l'opération de repliement précédente, au lieu de débloquer directement les deux axes de repliement, une pression est d'abord exercée sur le point d'appui à l'arrière du véhicule de façon à entamer la rotation du véhicule autour de l'arrière de celui-ci tout en maintenant la colonne de direction dépliée par son sommet. Ensuite seulement, après une certaine rotation du véhicule et une certaine élévation consécutive de sa partie avant, le déblocage des axes de repliement est opéré à partir du sommet de la colonne de direction. La suite de l'opération de repliement est alors semblable à celle décrite plus haut.

Lors de l'opération de repliement, une impulsion vers le haut et l'arrière peut être donnée par l'utilisateur à partir du sommet de la colonne de direction afin de faciliter et/ou accélérer l'opération de repliement.

Dans l'opération de repliement d'un véhicule selon l'invention, l'utilisateur ne doit pas se baisser, ce qui constitue un avantage supplémentaire, comme énoncé plus haut. En effet, d'une part, l'actionnement centralisé du déblocage des roues peut s'effectuer manuellement à partir du sommet de la colonne de direction, qui se trouve, dans la position initiale du véhicule, substantiellement à hauteur des mains de l'utilisateur en position debout. Et, d'autre part, le point d'appui à l'arrière du véhicule est situé de telle façon que le pied puisse exercer la pression nécessaire à l'opération.

Un but complémentaire de l'invention est de fournir un véhicule pliable dont l'opération de dépliement, comme l'opération de repliement, est, elle aussi, rapide, simple et s'effectue en continu.

L'opération de dépliement est succinctement décrite ici. Ce n'est qu'une façon de réaliser le dépliement, d'autres manières de réaliser ledit dépliement peuvent aussi être envisagées pour tirer profit d'une façon similaire des caractéristiques du véhicule selon l'invention. Une position initiale de l'opération de dépliement est par exemple la suivante. Le marchepied est en position substantiellement verticale par rapport au sol, les sections inférieure et supérieure de la colonne de direction sont situées le long dudit marchepied et les roues sont situées dans un alignement substantiellement vertical par rapport au sol, la roue arrière reposant sur le sol. En outre, le véhicule est maintenu par l'utilisateur via le sommet de la colonne de direction. Ensuite, après un éventuel déblocage des axes de repliement s'ils avaient fait l'objet d'un blocage en position repliée, le véhicule subit une rotation par rapport à un axe situé à l'arrière de celui-ci. Cette rotation amène la roue avant à se rapprocher du sol et, conjointement, amène la colonne de direction à se déplier, la section inférieure subissant une rotation par rapport au premier axe dans le sens de rotation de la roue avant lorsque le véhicule avance, et la section supérieure subissant une rotation par rapport au deuxième axe dans le sens contraire de rotation de la roue avant lorsque le véhicule avance. Enfin, une fois la colonne de direction dépliée et la roue avant ayant atteint le sol, le blocage des axes de repliement de la colonne de direction est effectué, soit automatiquement, soit via un système de blocage centralisé à partir du sommet de la colonne de direction.

Ainsi, les avantages de rapidité, de simplicité et de continuité sont aussi présents pour l'opération de dépliement. En outre, au vu de la description précédente, il est clair que l'opération de dépliement ne nécessite pas non plus que l'utilisateur ne se baisse.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
- Fig. 1: montre une représentation schématique d'un exemple du véhicule selon l'invention, de profil;
- Fig. 2 et 3: montrent des représentations schématiques du véhicule de la Fig. 1, de profil, en cours de repliement ou en cours de dépliement;
- Fig. 4: montre une représentation schématique du véhicule de la Fig. 1, de profil, lorsqu'il est replié;
- Fig. 5: montre une représentation schématique d'une première réalisation particulière du véhicule selon l'invention;
- Fig. 6a, 6b, 6c, 6d et 6e: montrent les étapes successives d'une manière de replier et de transporter le véhicule de la Fig. 5, de profil;
- Fig. 7a et 7b: montrent une représentation schématique d'une deuxième réalisation particulière du véhicule selon l'invention, avec, en particulier, une réalisation particulière du système de déblocage centralisé des axes de la colonne de direction en exergue;
- Fig. 8a et 8b: montrent une représentation schématique d'une troisième réalisation particulière du véhicule selon l'invention, avec, en particulier en exergue, une autre réalisation particulière du système de déblocage centralisé des axes de la colonne de direction;
- Fig. 9a: montre une représentation schématique d'une réalisation particulière du véhicule selon l'invention, de profil, dans lequel deux barres supplémentaires sont présentes;
- Fig. 9b et 9c: montrent le véhicule de la Fig. 9a respectivement au cours de l'opération de repliement et replié;
- Fig. 10: montre une représentation schématique vue de haut du principe d'une réalisation particulière de l'articulation au droit du premier axe du véhicule de la Fig. 9a; et
- Fig. 11: montre une représentation schématique d'une réalisation particulière du véhicule selon l'invention, de profil, dans lequel une courroie et deux poulies sont présentes.

Les figures ne sont pas dessinées à l'échelle. Généralement, des éléments semblables sont dénotés par des références semblables dans les figures.

### Description détaillée de modes de réalisation particuliers

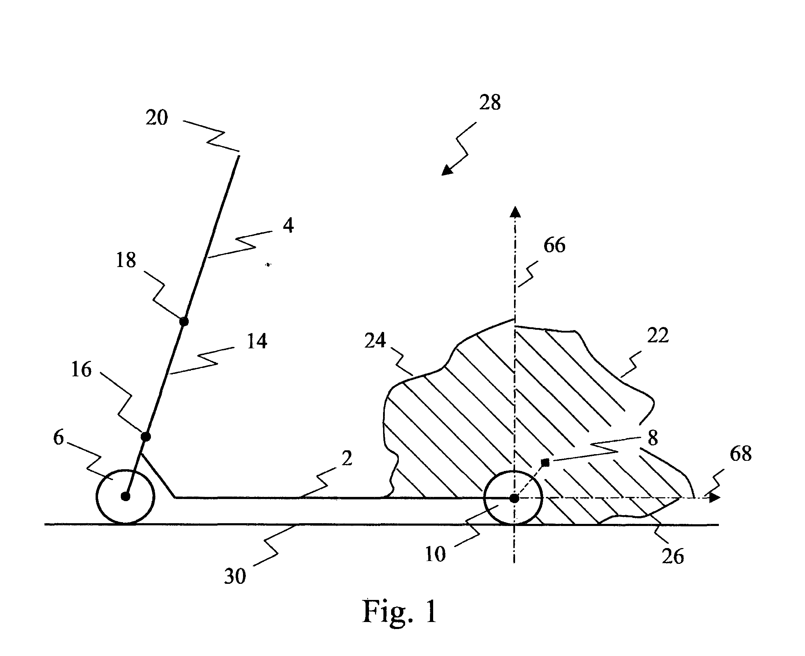

La Fig.1 montre une représentation schématique du véhicule selon l'invention qui est ici appelé trottinette (28) sans que ceci ne doive être considéré comme une restriction de quelque ordre que ce soit.

La trottinette (28) comprend au moins deux roues, dont au moins une roue avant (6) et au moins une roue arrière (10). Il sera clair pour l'homme du métier que la trottinette (28) peut contenir un nombre quelconque de roues supplémentaires, que ce soit pour offrir plus de stabilité, par exemple grâce à la présence de deux roues à l'arrière ou à l'avant, ou pour améliorer une caractéristique quelconque de la trottinette (28), par exemple grâce à la présence de roues alignées sous le marchepied (2) ou grâce à la présence d'une roue ou plusieurs roues ou roulettes permettant de tirer la trottinette (28) derrière soit lorsqu'elle est pliée. Il sera également clair pour l'homme du métier que les roues peuvent être de toutes tailles, que par exemple le rayon de la roue avant (6) peut être plus grand, plus petit ou égal au rayon de la roue arrière (10), que leur composition peuvent être quelconque, par exemple en bois, en plastique ou en caoutchouc, qu'elles peuvent contenir des rayons tels ceux des bicyclettes, des pneus gonflables ou pleins, des amortisseurs ou quelque autre caractéristique.

La trottinette (28) comprend en outre un marchepied (2) ou plancher sur lequel l'utilisateur (34) peut poser un ou deux pieds, qui peut par exemple être revêtu d'une matière antidérapante. Le marchepied (2) est monté sur au moins la roue avant (6) et la roue arrière (10), soit directement soit par l'intermédiaire de pièces complémentaires, et peut être de quelque matière que ce soit, comme par exemple en métal, en acier, en aluminium, en bois ou en plastique. Il sera clair pour l'homme du métier que toutes les autres pièces du véhicule selon l'invention peuvent également être, de la même manière, dans quelque matière que ce soit.

La trottinette (28) comprend également une colonne de direction comprenant, comme décrit précédemment, deux axes de repliement, le premier axe (16) et le deuxième axe (18) définissant la section inférieure (14) et la section supérieure (4) de la colonne de direction. Le sommet (20) de la colonne de direction, qui peut par exemple contenir un guidon, une boule ou un manche afin que l'utilisateur (34) puisse maintenir ledit sommet (20) aisément et confortablement. D'autre part, il sera clair pour l'homme du métier que la colonne de direction peut être ajustable en hauteur.

La trottinette (28) comprend également un système de déblocage centralisé des axes de repliement de la colonne de direction. Celui-ci peut être de différents types, par exemple mécanique, électrique ou hydraulique, et comprend une ou plusieurs commandes ou moyens de commande se trouvant par exemple au sommet (20) de la colonne de direction, proche de celui-ci, c'est-à-dire à moins de 60 cm, ou proche de la roue arrière (10). Dans les deux premiers exemples, c'est-à-dire dans le cas où les moyens de commande sont au sommet (20) ou proches du sommet (20) de la colonne de direction, ce sont par exemple une ou des commandes manuelles, comme un ou des boutons, une ou des clés ou encore une ou des manettes. Dans le troisième exemple, c'est-à-dire dans le cas où les moyens de commande sont proches de la roue arrière (10), ce sont par exemple des commandes au pied, comme une ou des pédales. Dans ce dernier cas, le dépliement sera donc enclenché non plus via le sommet (20) de la colonne de direction, mais par l'arrière de la trottinette. Le système de déblocage centralisé comprend en outre des moyens de transmission de la commande du déclenchement du mécanisme de déblocage, par exemple un câble, dans une gaine ou non, ou un jeu d'organes rigides. Enfin, le système de déblocage comprend des moyens proprement dits de déblocage et blocage des axes de repliement de la colonne de direction. Ces moyens permettent de désolidariser deux axes, ne comportant donc pas au départ de degré de liberté relatif, et autoriser leur mouvement relatif selon un degré de liberté. Ces moyens peuvent être par exemple un système de verrous ou loquets, un système impliquant une tige insérée amovible qui dans une position empêche substantiellement la rotation et dans une autre position rend possible celle-ci, un système d'accroche permettant d'empêchant substantiellement la rotation ou un système de disques à encoche.

La trottinette (28) comprend enfin un point d'appui (8) situé dans le premier quadrant (22), le deuxième quadrant (24) ou le quatrième quadrant (26), les quadrants étant représentés à la Fig. 1 et délimités par le premier (66) et le second plans (68), solidaires du marchepied (2). La position angulaire du point d'appui (8) est calculée à partir du premier plan (68) dans le sens sénestrorsum, dans le profil de la Fig. 1. Ainsi, par convention ici, la position angulaire du point d'appui (8) est de 0 degré s'il est situé dans le premier plan (66) à l'arrière du second plan (68) et est de 90 degrés s'il est situé dans le second plan (68) au-dessus du premier plan (66).

Il sera évident pour l'homme du métier que ledit point d'appui (8) ne peut pas se trouver dans le quatrième quadrant (26) qu'au-dessus du niveau du sol (30), faute de quoi il gênerait voire empêcherait le déplacement du véhicule. De même, il sera clair pour l'homme du métier que ledit point d'appui (8) ne peut pas ni se trouver trop près du marchepied (2) dans le deuxième quadrant (24), c'est-à-dire si près de celui-ci que l'utilisateur (34) ne pourrait s'en servir à aucun moment de l'opération de repliement comme point d'appui (8), ni trop loin de la roue arrière (10), c'est-à-dire si loin de celle-ci que l'utilisateur (34) ne pourrait pas simultanément maintenir le sommet (20) de la colonne de direction et effectuer une pression sur le point d'appui (8).

A présent que la structure de la trottinette (28) a été expliquée en relation avec la Fig. 1, les mécanismes de repliement et de dépliement sont expliqués en relation avec les représentations schématiques de la trottinette vue de profil des Fig. 1, 2, 3 et 4, qui doivent être considérées uniquement pour ce qu'elles sont, c'est-à-dire des schémas de principe, et non les seules et uniques manières de réaliser les opérations de repliement et de dépliement.

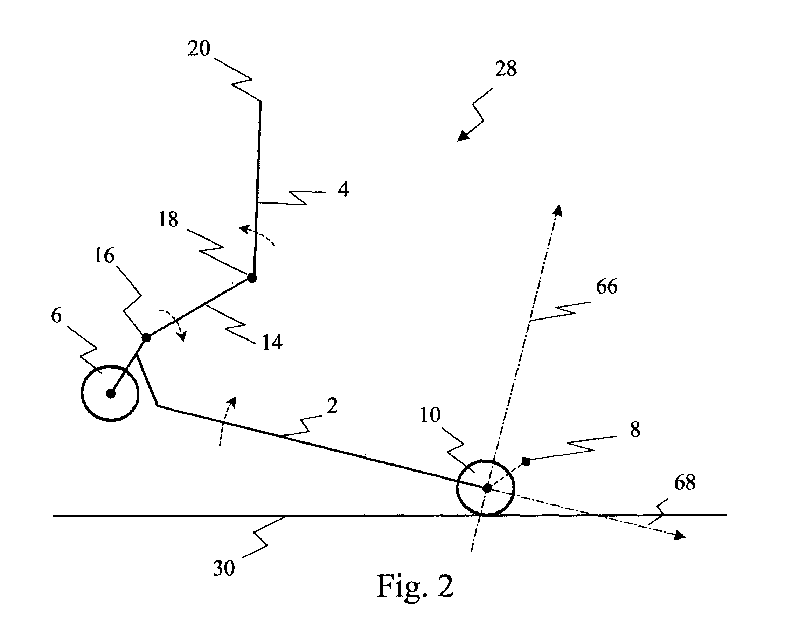

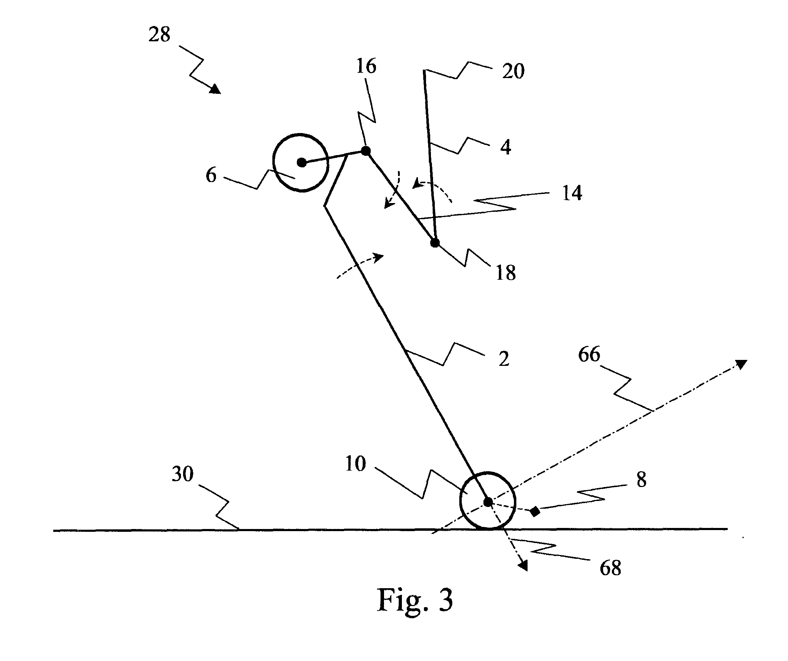

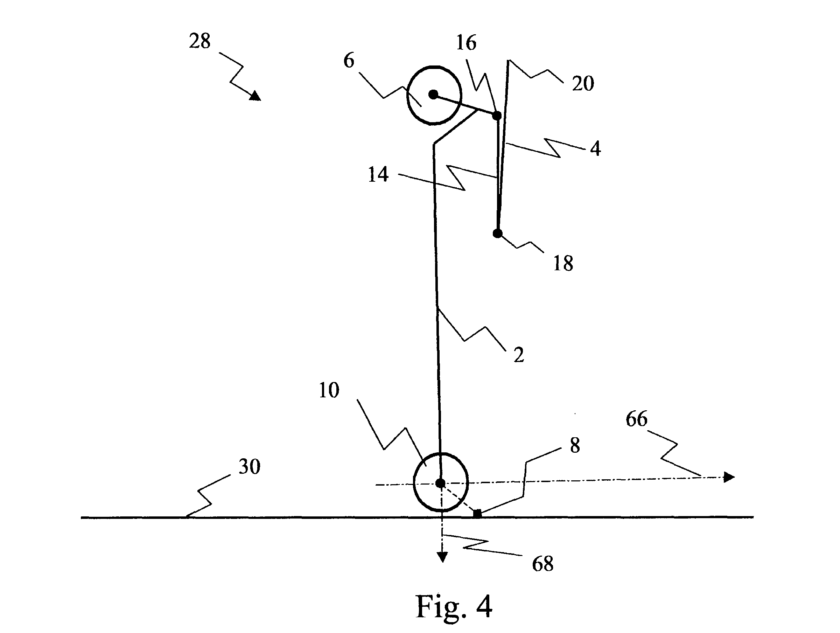

La Fig. 1 représente schématiquement la position dépliée, c'est-à-dire la position initiale de la trottinette (28) lors de l'opération de repliement, et sa position finale lors de l'opération de dépliement. Les Fig. 2 et 3 représentent schématiquement des positions intermédiaires de la trottinette (28) lors des opérations de repliement et de dépliement. Enfin, la Fig. 4 représente schématiquement la position repliée, c'est-à-dire la position finale de la trottinette (28) lors de l'opération de repliement, et sa position initiale lors de l'opération de dépliement.

Comme décrit plus haut, le mécanisme de repliement de la trottinette (28) selon l'invention se déroule comme suit. D'abord, dans sa position initiale, comme montré à la Fig. 1, la roue avant (6) est en contact avec le sol (30) et le premier (16) et le deuxième axes (18) sont bloqués d'une façon telle qu'ils ne permettent substantiellement pas de mouvement de rotation relatif des éléments qu'ils lient. Ensuite, le premier (16) et le deuxième axes (18) sont débloqués grâce à un système de déblocage centralisé situé au ou près du sommet (20) de la colonne de direction, permettant ainsi un mouvement relatif selon un degré de liberté des éléments qu'ils lient. Une pression est alors exercée, par exemple par le pied de l'utilisateur (34) sur le point d'appui (8), le sommet (20) de la colonne de direction est maintenu, par exemple par au moins une main de l'utilisateur (34), et, comme montré aux Fig. 2 et 3, la trottinette (28) subit un mouvement de pivotement, la roue avant (6) se soulève du sol (30), et les sections inférieures (14) et supérieures (4) se replient. L'opération de repliement se poursuit jusqu'à ce que le marchepied (2) soit substantiellement à la verticale, c'est-à-dire substantiellement perpendiculaire au sol (30), et jusqu'à ce que les sections inférieure (14) et supérieure (4) soient substantiellement l'une le long de l'autre, comme montré à la Fig. 4. La trottinette (28) ainsi repliée peut être transportée aisément, après un possible blocage du premier (16) et du deuxième axes (18), dans la configuration de la Fig. 4, par exemple grâce à des moyens de blocage semblables aux moyens utilisés dans le système de déblocage centralisé de la colonne de direction décrit précédemment. Le système de blocage peut être centralisé et commandé à partir du sommet (20) de la colonne de direction.

Comme également décrit plus haut, le mécanisme de dépliement de la trottinette (28) selon l'invention se déroule comme suit. D'abord, dans sa position initiale, comme décrit à la Fig. 4, la trottinette (28) est dans une position similaire à la position finale de l'opération de repliement. Ensuite, après un déblocage des axes de la colonne de direction si nécessaire, la trottinette subit une rotation dont les étapes sont successivement montrées aux Fig. 4, 3, 2 et 1. A noter cependant que, dans ce cas, les flèches indiquant les mouvements de la section inférieure (14), de la section supérieure (4) et de la trottinette (28), dans les Fig. 2 et 3, doivent être inversées. Pendant cette opération de dépliement, l'utilisateur (34) maintient le sommet (20) de la colonne de direction et peut éventuellement exercer une résistance sur le point d'appui (8), par exemple avec le pied, de façon à ralentir le basculement de la trottinette (28).

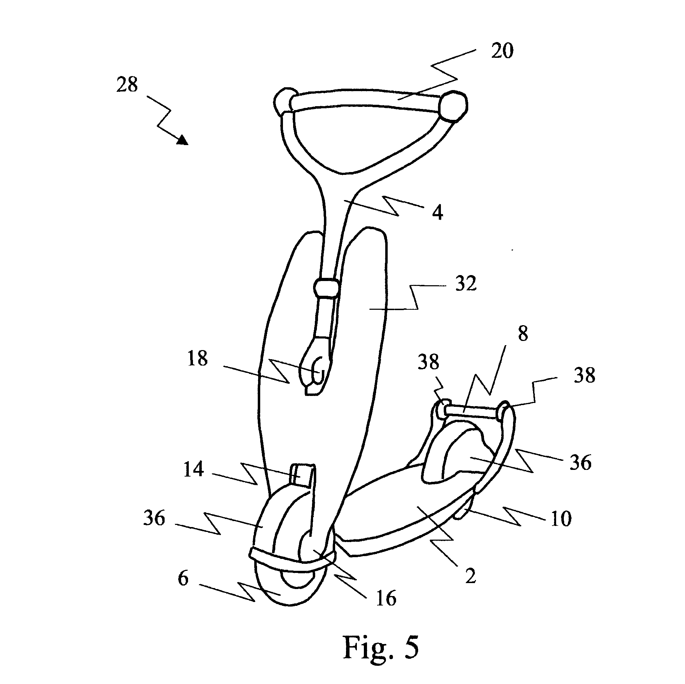

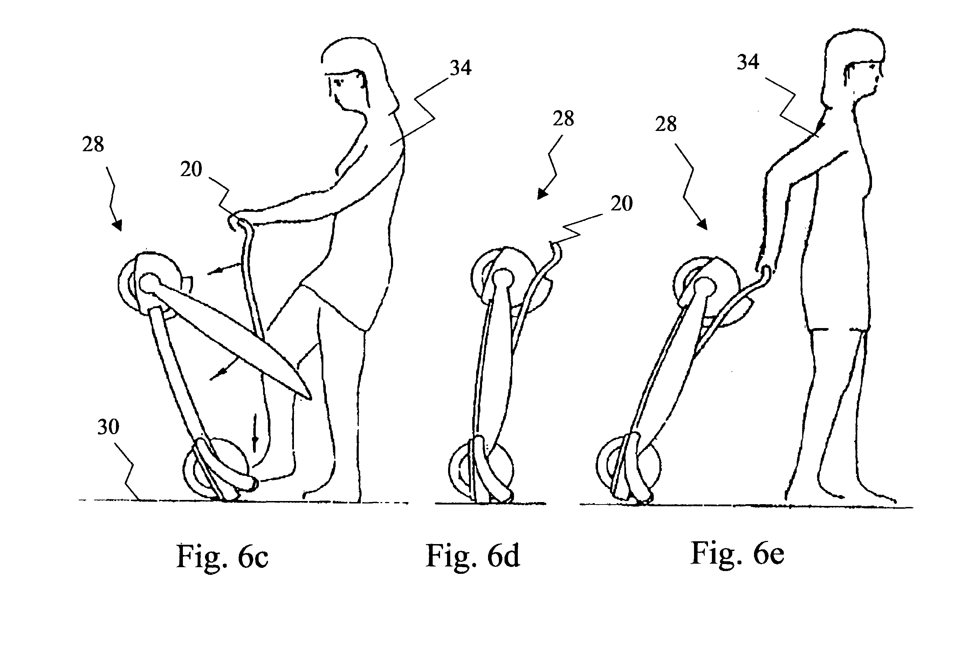

Une première réalisation particulière de la trottinette (28) selon l'invention est représentée à la Fig. 5. La trottinette (28) comprend une barre de maintien ou guidon au sommet (20) de la colonne de direction. Cinq particularités peuvent être mises en évidence. La première est la présence d'un corps de protection (32) solidaire à la section inférieure (14) de la colonne de direction. Celui-ci peut par exemple être en plastique. La deuxième est le fait que le point d'appui (8) est lié au châssis de la trottinette (28) via deux organes de maintien. La troisième est la présence de garde-boue (36) pour éviter tout éclaboussement. La quatrième est le fait que le premier axe (16) est confondu avec l'axe de la roue avant (6). Enfin, la cinquième particularité est la présence de roulettes (38) près du point d'appui (8), dont les avantages sont expliqués plus loin en référence à la Fig. 6e. Pour la clarté du dessin, le système de déblocage centralisé des axes de la colonne de direction n'est pas représenté à la Fig. 5. Des exemples de réalisation de ce système sont néanmoins décrits et illustrés plus loin.

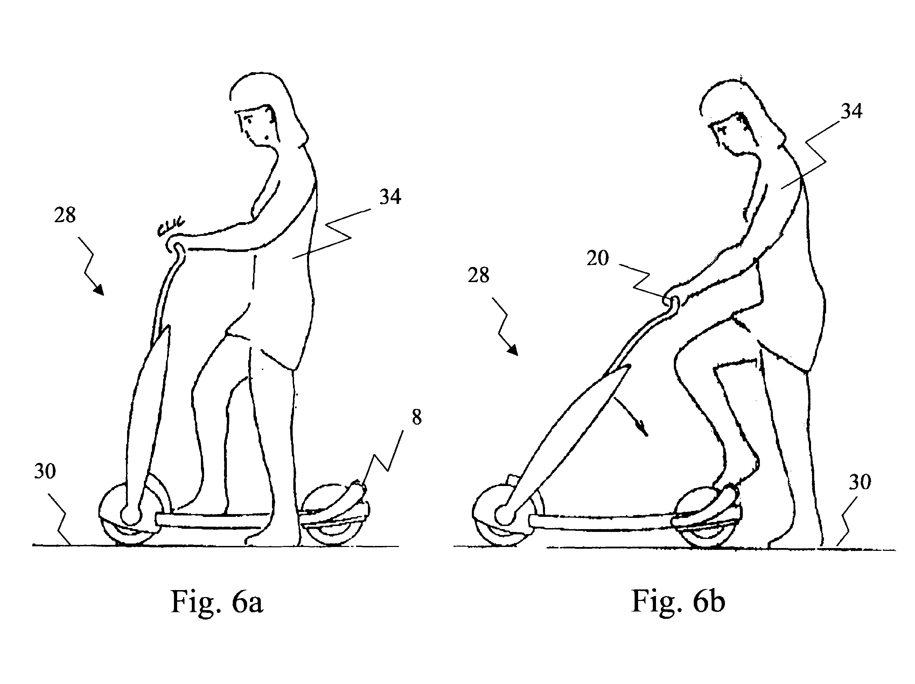

Les Fig. 6a, 6b, 6c et 6d montrent une manière de réaliser l'opération de repliement appliquée à la première réalisation particulière de la trottinette (28) selon l'invention.

La Fig. 6e montre une manière de transporter la trottinette (28) dans sa première réalisation particulière, où l'utilisateur (34) la tire derrière lui. Il est clair que la trottinette (28) peut également être poussée à la manière d'un caddy, d'une poussette ou d'une valise possédant de telles roulettes (38). Il sera clair pour l'homme du métier que la trottinette (28) peut comprendre une ou plusieurs roulettes (38). De préférence, la trottinette (28) comprend deux roulettes (38) ou une roulette (38) de forme étendue selon son axe de rotation, à la manière du rouleau d'un rouleau compresseur. En outre, le ou les roulettes (38) ne sont de préférence pas en contact avec le sol (30) lorsque la trottinette (28) est dépliée, comme montré à la Fig. 6a. Cela présente l'avantage de garder la ou les roulettes (38) propres et de ne pas salir le revêtement de sol (30) lorsque l'on tire la trottinette (28) par exemple dans un bureau ou un magasin. Enfin, lorsque la trottinette (28) est en position repliée, le guidon, manche ou la barre de maintien est de préférence situé à l'avant du premier axe (16). En d'autres termes, la distance entre le sommet (20) de la colonne de direction et le deuxième axe (18) est supérieure à la distance entre le deuxième axe (18) et le premier axe (16), voire également supérieure à la distance entre le deuxième axe (18) et le point de la section inférieure (14) à l'extrémité opposée au deuxième axe (18), si ladite extrémité n'est pas le premier axe (16) .

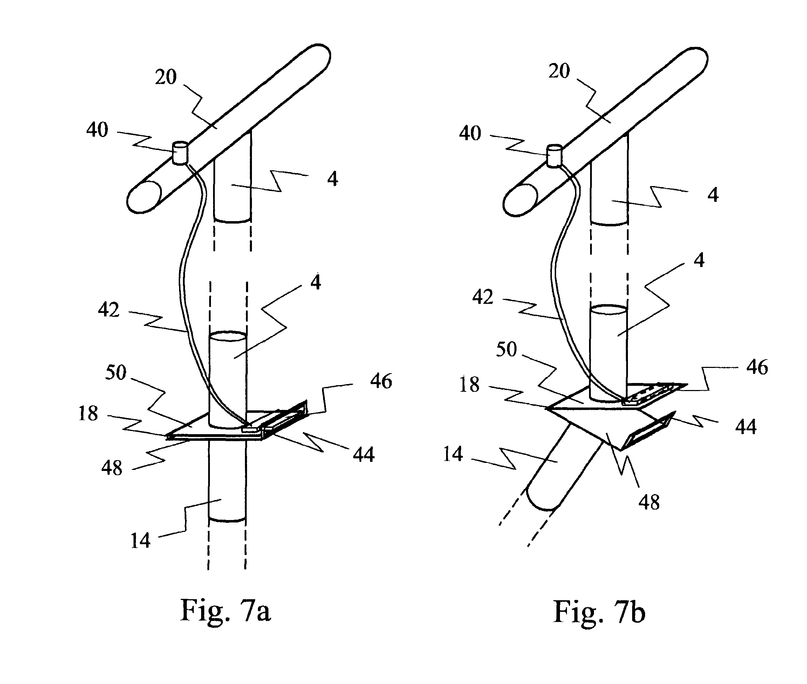

Une deuxième réalisation particulière de la trottinette (28) selon l'invention est représentée aux Fig. 7a et 7b. En particulier, une réalisation particulière du système de déblocage centralisé des axes de la colonne de direction est montrée, avec successivement le deuxième axe (18) en position bloquée, montré à la Fig. 7a et le deuxième axe (18) en position débloquée, montré à la Fig. 7b. Les Fig. 7a et 7b montrent le guidon ou manche au sommet (20) de la colonne de direction, la section supérieure (4) de la colonne de direction, avec une interruption dans sa représentation, la section inférieure (14) de la colonne de direction, dont la représentation est également interrompue, et le deuxième axe (18), où une charnière relie deux plateaux, par exemple en acier, respectivement solidaires de la section inférieure (14) et de la section supérieure (4). En outre, à son extrémité opposée à la charnière, le plateau inférieur (48) comprend une gâchette (44), gâche ou crampon, et, également à son extrémité opposée à la charnière, le plateau supérieur (50) comprend une pêne (46), l'assemblage formant un verrou ou loquet électromagnétique ou mécanique, actionné depuis la commande du système de déblocage centralisé (40) et via le câble de transmission (42). Ainsi, comme montré sur la Fig. 7a, le système verrouillé assujettit les sections inférieure (14) et supérieure (4) de la colonne de direction. Lorsqu'il est déverrouillé, comme montré sur le Fig. 7b, lesdites sections peuvent en revanche opérer un mouvement relatif de rotation. Ce mécanisme est un exemple exposant une manière de réaliser le système de déblocage centralisé et peut être repris pour l'articulation du premier axe (16), mutatis mutandis, c'est-à-dire inversé de façon à permettre une rotation en sens inverse. D'autre part, le blocage des sections inférieure (14) et supérieure (4) le long du marchepied (2) dans la position repliée peut être fait grâce à un système d'attache de type « clips ».

Dans cette deuxième réalisation particulière de la trottinette (28) selon l'invention, la pêne (46) est un verrou électromagnétique bistable, qui peut être éventuellement alimenté par une batterie situé sur la trottinette (28), s'il y en a. En outre, les plateaux sont préférablement recouverts sur leur face interne d'un revêtement caoutchouté qui donne un effet de serrage et rigidifie l'ensemble lors du blocage d'axe.

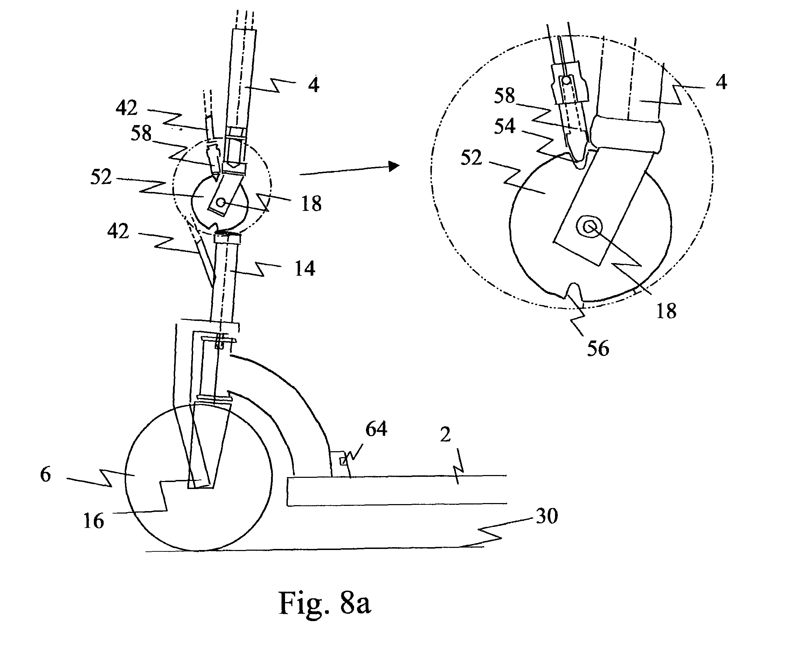

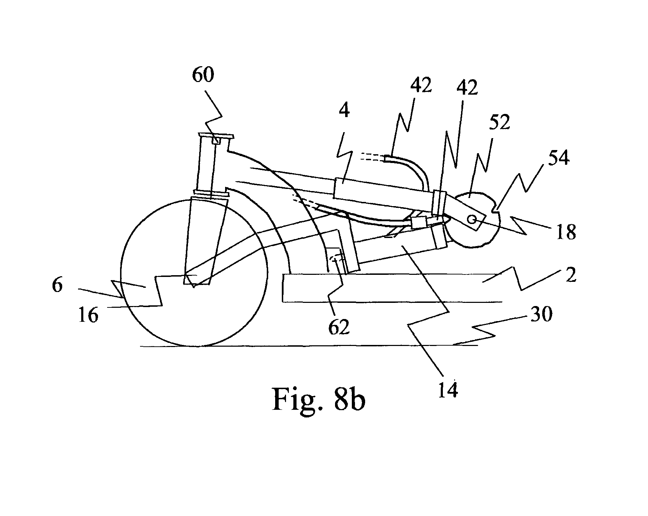

Une troisième réalisation particulière de la trottinette (28) selon l'invention est représentée aux Fig. 8a et 8b. En particulier, une autre réalisation particulière du système de déblocage centralisé des axes de la colonne de direction est montrée. Cette réalisation utilise un système de saillies mobiles commandées et d'encoches, les saillies venant s'introduire dans les encoches dans la position d'assujettissement des axes et lesdites saillies pouvant sortir desdites encoches pour permettre le mouvement. Dans cette réalisation particulière de l'invention, un disque (52) à deux encoches est fixé, de façon complètement solidaire, à la section inférieure (14) de la colonne de direction. Il peut y avoir également 2 disques accolés l'un à autre, un des disques (52) étant solidaire d'une des deux sections, et l'autre disque (52) étant solidaire de l'autre section. En position dépliée, comme montré sur la Fig. 8a, les sections inférieure (14) et supérieure (4) de la colonne de direction sont dans le prolongement l'une de l'autre, et une première saillie mobile (58) actionnée par une commande (40) située au sommet (20) de la colonne de direction via un câble de transmission (42) est insérée dans la première encoche (54) du disque (52), la gaine de ladite première saillie mobile (58) étant solidaire de la section supérieure (4) de la colonne de direction. En outre, une seconde saillie mobile (62) actionnée par une commande (40) située au sommet (20) de la colonne de direction via un second câble de transmission (42) est insérée dans une troisième encoche (60) situé dans une pièce solidaire du marchepied (2), la gaine de la seconde saillie mobile (62) étant solidaire de la section inférieure (14) de la colonne de direction.

Lors de l'opération de repliement, la première saillie mobile (58) sort de la première encoche (54) sous l'effet d'une action mécanique ou électrique commandée. De même, la seconde saillie mobile (62) sort de la troisième encoche (60) sous l'effet d'une action similaire. Ensuite, les sections inférieure (14) et supérieure (4) subissent chacune un mouvement rotatif tel que décrit précédemment. Enfin, l'opération de dépliement se termine, d'une part, par l'introduction de la première saillie mobile (58) dans la seconde encoche (56) du disque (52) et, d'autre part, par l'introduction de la seconde saillie mobile (62) dans une quatrième encoche (64) ménagée près du marchepied (2). Une fois l'opération de repliement terminée, comme montré à la Fig. 8b, les deux axes sont bloquées et la trottinette (28) peut être transportée sans être trop encombrante. L'opération de repliement peut également se terminer avec la trottinette (28) selon l'invention en position substantiellement verticale, comme décrit plus haut.

De façon semblable, l'opération de dépliement de la trottinette (28) de la troisième réalisation particulière de l'invention se réalise de façon similaire, mutatis mutandis.

A noter que, afin que la section supérieure (4) puisse correctement se replier comme montré à la Fig. 8b, il est préférable qu'elle comprenne une fourche similaire à celle de la Fig. 5. Ainsi, le télescopage de la section supérieure (44) et de la partie solidaire du marchepied (2) et située au-dessus de la roue avant (6) est évité.

Selon une autre réalisation préférée de l'invention, le système de déblocage, et éventuellement de blocage, des axes de la colonne de direction est réalisé, entre autres, grâce à un organe rigide creux cylindrique pouvant coulisser le long d'une des sections de la colonne de direction. Dans cette réalisation, ledit organe vient, dans la position bloquée et dépliée, entourer l'articulation correspondant au deuxième axe (18) de façon à empêcher toute rotation desdites sections autour dudit deuxième axe (18). En revanche, lorsque la colonne de direction est débloquée, l'organe cylindrique n'entoure plus ladite articulation et le mouvement relatif des axes est possible.

Selon une autre réalisation préférée de l'invention, le point d'appui (8) se trouve dans le premier quadrant (22) à une distance de l'axe de la roue arrière (10) comprise entre 2 et 80 cm. Préférablement, le point d'appui (8) a une position angulaire comprise entre 30 et 90 degrés et est à une distance de l'axe de la roue arrière (10) comprise entre 5 et 40 cm.

Selon une autre réalisation préférée de l'invention, la trottinette (28) comprend une ou des roulettes (38) près de la roue arrière (10) et, en position repliée et en station substantiellement verticale, tient debout sans maintien extérieur, sur la ou les roulettes (38) et la roue arrière (10).

Selon une autre réalisation préférée de l'invention, à partir de la position dépliée de la colonne de direction, dès lors que les premier (16) et deuxième (18) axes sont débloqués, la rotation selon le premier axe (16) n'est possible que dans un sens et la rotation selon le deuxième axe (18) n'est possible que dans le sens inverse.

Selon une autre réalisation préférée de l'invention, à partir de la position dépliée de la colonne de direction, dès lors que les axes sont débloqués, la rotation selon le premier axe (16) n'est possible que dans un sens et la rotation selon le deuxième axe (18) n'est possible que dans le sens inverse et le seul sens possible de rotation de la section inférieure (14) par rapport au marchepied (2) est le sens inverse de celui de la rotation de la roue avant (6) lorsque le véhicule avance.

Selon une autre réalisation préférée de l'invention, l'axe de la roue avant (6) n'est pas confondu avec le premier axe (16) mais est néanmoins solidaire de la section inférieure (14), d'une façon telle que la roue avant (6) bascule avec la section inférieure (14) lors du repliement.

Il sera clair pour l'homme de métier que la présence sur le véhicule de quelque accessoire que ce soit, par exemple un moteur muni ou non d'un système de régénération, un système de freinage, une selle, un système de stockage par exemple de bagages, destinée à une boîte de secours ou à des effets personnels constitue des variantes comprises dans la présente invention.

Il sera également clair pour l'homme du métier que tous les véhicules similaires qui peuvent être repliés selon le principe décrit précédemment sont inclus dans ladite invention. Entre autres, sont inclues toutes les trottinettes (28) ou patinettes, les planches permettant de se déplacer par exemple sur la neige, l'eau ou le sable, avec un ou plusieurs skis, sur la glace avec patins, sur un rail ou tout autre véhicule similaire, par exemple à roue, à ski ou à chaîne.

Il sera en outre clair pour l'homme du métier que la colonne de direction peut être une tige de maintien, c'est-à-dire une tige incapable d'orienter la roue avant (6). Dans ce cas, le véhicule peut par exemple changer de direction grâce à un décollement de la roue avant (6) suivi d'une rotation autour de la roue arrière (10), et enfin un nouveau contact de la roue avant (6) avec la surface de déplacement, par exemple le sol (30). La rotation peut aussi être effectuée à l'inverse par un décollement de la roue arrière (10) suivi d'une rotation sur la roue avant (6), voire grâce à un décollement simultané des deux roues.

Il sera en outre encore clair pour l'homme de métier que la commande (40) du système de déblocage centralisé de la colonne de direction peut être en une ou deux parties, voire plus. De plus, le déblocage des deux axes de ladite colonne peut être simultané ou peut se faire séparément, c'est-à-dire que les axes peuvent être débloqués indépendamment l'un de l'autre, et l'homme du métier comprendra aisément qu'alors l'opération de dépliement est légèrement différente, sans s'écarter du véhicule selon l'invention.

Selon une autre réalisation préférée de l'invention, le véhicule (28) comprend des moyens pour forcer la rotation de la section supérieure (4) de la colonne de direction par rapport à sa section inférieure (14) et la rotation de la section inférieure (14) autour du premier axe (16) à avoir lieu de façon dépendante l'une de l'autre et à n'avoir lieu que dans des sens opposés. En d'autres termes, les moyens permettent de lier les rotations entre elles, c'est-à-dire l'une entraînant l'autre, ou asservissant l'autre, et l'une n'ayant lieu que lorsque l'autre a également lieu. L'avantage d'un tel système est de faciliter l'opération de repliement en forçant les rotations à avoir lieu dans des sens opposés et éviter ainsi le repliement de la colonne de direction selon des modes qui comporteraient des risques pour l'utilisateur de se blesser ou d'endommager certaines parties du véhicule (28). La réalisation de tels moyens est une chose connue dans l'état de la technique et il sera clair pour l'homme du métier que quels que soient lesdits moyens, ceux-ci ne constituent que des variantes du véhicule (28) selon l'invention, tel que décrit ici.

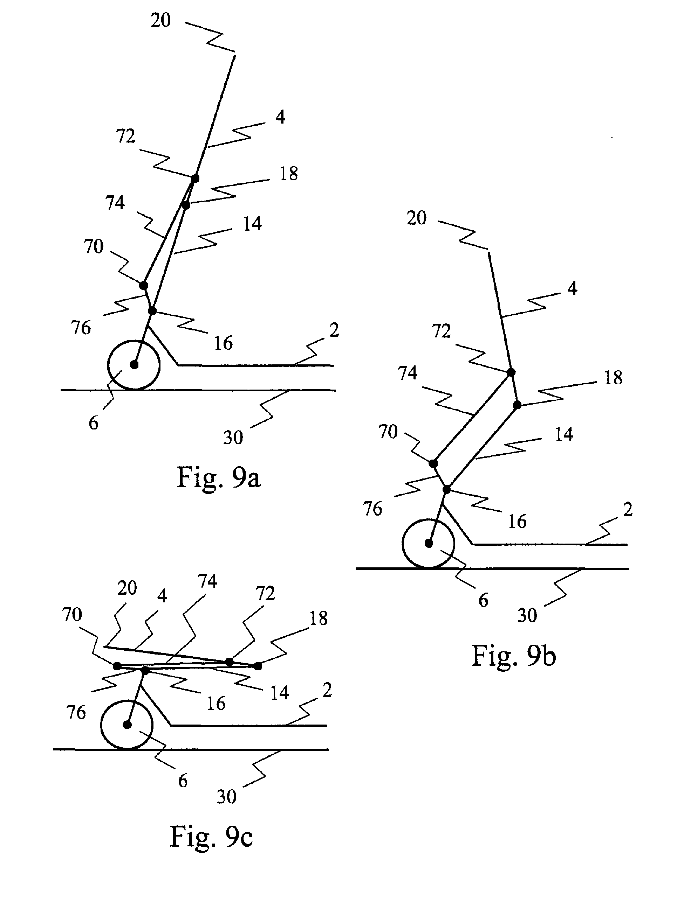

La Fig. 9a montre la partie avant d'un exemple de réalisation du véhicule (28) comprenant des moyens permettant de lier les rotations des axes entre elles de la manière décrite ci-dessus. Les Fig. 9b et 9c montrent la partie avant du véhicule (28) de la Fig. 9a respectivement lors d'un exemple d'une opération de repliement, et replié. L'opération de repliement illustrée aux Fig. 9b et 9c montre la roue avant (6) touchant en permanence le sol (30), mais il sera clair pour l'homme du métier qu'un quelconque des modes de repliement tels qu'expliqués dans la description du véhicule (28) selon la présente invention peut être appliqué à la variante des Fig. 9a, 9b et 9c.

Dans l'exemple de la Fig. 9a, deux barres sont présentes. La première barre (74) est liée, d'une part, à la section supérieure (4) de la colonne de direction par le biais d'un troisième axe (72) permettant la rotation de ladite première barre (74) par rapport à ladite section supérieure (4) et, d'autre part, à la seconde barre (76) par le biais d'un quatrième axe (70) permettant la rotation de ladite première barre (74) par rapport à ladite seconde barre (76). La seconde barre (76) est quant à elle en outre liée à la partie solidaire du marchepied (2) ou châssis par le biais du premier axe (16) permettant la rotation de ladite seconde barre (76) par rapport au châssis. Sont enfin présents des moyens permettant de forcer ladite rotation de la seconde barre (76) par rapport au châssis et la rotation de la section inférieure (14) de la colonne de direction par rapport au châssis à avoir lieu de façon dépendante l'une de l'autre et à n'avoir lieu que dans des sens opposés. La réalisation de tels moyens est une chose connue dans l'état de la technique.

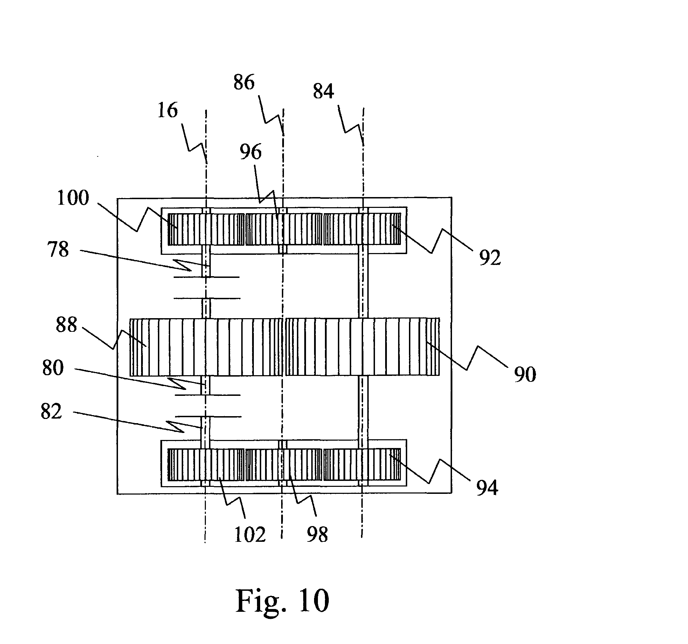

La Fig. 10 montre une représentation schématique d'un exemple d'une réalisation particulière de tels moyens, sans que cela ne soit d'une quelconque manière limitatif. Un schéma de principe d'un système comprenant des engrenages y est représenté vu de haut. La section inférieure (14) et la seconde barre (76) sont tels qu'un de ces deux éléments est solidaire d'un premier tronçon (78) du premier axe (16) et d'un deuxième tronçon (82) du premier axe (16), les tronçons extrêmes, et l'autre de ces deux éléments est solidaire d'un troisième tronçon (80) central du premier axe (16), le troisième tronçon (80) n'étant pas solidaire des deux autres troncons. En outre, le troisième tronçon (80) supporte une première roue dentée (88) apte à transmettre un mouvement rotationnel opposé à une deuxième roue dentée (90) sur un cinquième axe (84), ledit cinquième axe (84) comprenant une troisième roue dentée (92) et une quatrième roue dentée (94), toutes deux solidaires de la deuxième roue dentée (90). Ainsi, la deuxième roue dentée (90) est apte à transmettre un mouvement rotationnel à la paire de roues dentées extrêmes du cinquième axe (84), lesdites paires de roues dentées étant quant à elles aptes à transmettre un mouvement rotationnel opposé aux cinquième (96) et sixième (98) roues dentées sur un sixième axe (86). Enfin, la paire de roues dentées dudit sixième axe (86) sont aptes à transmettre un mouvement rotationnel opposé aux septième (100) et huitième (102) roues dentées sur les tronçons extrêmes du premier axe (16). Ceci permet l'asservissement des positions angulaires de la section inférieure (14) de la colonne de direction et de la seconde barre (76).

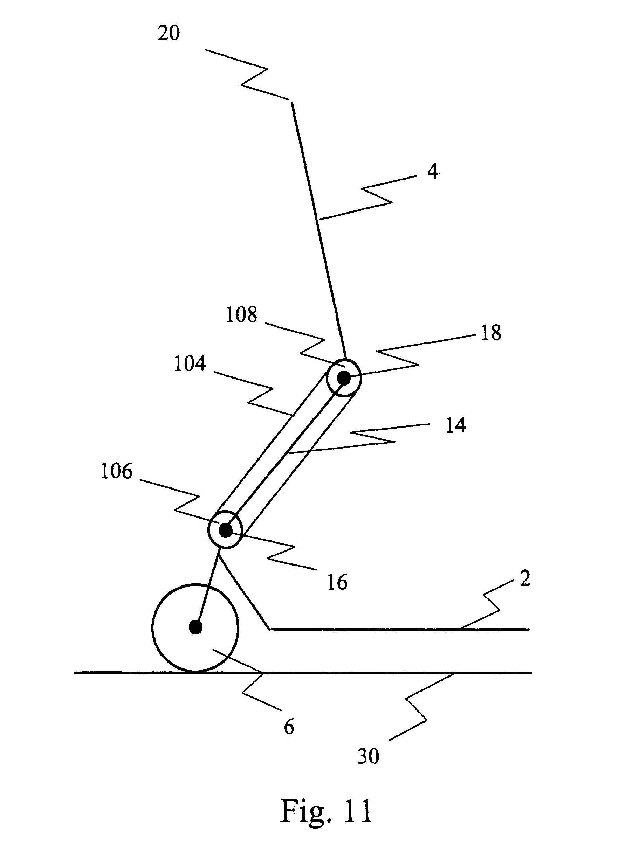

La Fig. 11 montre la partie avant d'un deuxième exemple de réalisation du véhicule (28) selon l'invention, comprenant des moyens permettant de lier les rotations des axes entre elles de la manière décrite ci-dessus. D'une part, une première poulie (106) a comme axe le premier axe (16) et est solidaire du châssis, c'est-à-dire que ladite première poulie (16) ne peut pas effectuer de mouvement par rapport au châssis. D'autre part, une seconde poulie (108) a comme axe le deuxième axe (18) et est solidaire de la section supérieure (4) de la colonne de direction. Enfin, une courroie (104) est disposée autour de ladite première poulie (106) et de ladite seconde poulie (108). La section inférieure (14) de la colonne de direction n'est quant à elle solidaire d'aucune des deux poulies. A condition que la courroie (104) soit bien tendue afin de créer un asservissement mutuel des mouvements rotationnels des poulies, ce mécanisme constitue des moyens de lier les rotations des axes entre elles de la manière décrite ci-dessus, comme l'homme du métier le comprendra aisément, et a l'avantage d'être simple et peu coûteux à mettre en oeuvre.

En résumé, l'invention peut être décrite comme suit : Véhicule (28) pliable comprenant une colonne de direction pouvant se replier le long d'un marchepied (2) grâce à la présence de deux axes de repli parallèles, en outre un système de déblocage centralisé des axes de la colonne de direction et un point d'appui (8) situé près de la roue arrière (8). Ainsi, le véhicule (28) peut être repliée rapidement, simplement et de façon continue, sans qu'il soit nécessaire pour l'utilisateur (34) de se baisser. Avantageusement, le véhicule (28) peut comprendre une ou des roulettes (38) proches du point d'appui (8) permettant à l'utilisateur (34) de le transporter derrière lui.

## Revendications

1. Véhicule (28) comprenant
un marchepied (2);
au moins deux roues, dont au moins une roue avant (6) et au moins une roue arrière (10); et
une colonne de direction de l'au moins une roue avant (6), ou tige de maintien,
la colonne de direction ou tige de maintien étant repliable selon deux axes de repliement,
**caractérisé en ce que**
les deux axes de repli sont substantiellement parallèles;
le véhicule comprend un point d'appui (8) situé dans le premier (22), le deuxième (24) ou le quatrième quadrant (26) de la roue arrière (10); et **en ce que**
la colonne de direction ou tige de maintien comprend un système centralisé de déblocage des axes de repliement de celle-ci.

2. Véhicule (28) selon la revendication 1, **caractérisé en ce que** le système centralisé de déblocage des axes de repliement comprend des moyens de commande situés au sommet (20) ou proches du sommet (20) de la colonne de direction.

3. Véhicule (28) selon les revendications 1 ou 2, **caractérisé en ce que** le point d'appui (8) se trouve dans le premier quadrant (22) à une distance d'un axe de la roue arrière (10) comprise entre 2 et 80 cm.

4. Véhicule (28) selon l'une quelconque des revendications précédentes, **caractérisé en ce que** le point d'appui (8) a une position angulaire comprise entre 30 et 90 degrés et est à une distance de l'axe de la roue arrière (10) comprise entre 5 et 40 cm.

5. Véhicule (28) selon l'une quelconque des revendications précédentes, **caractérisé en ce qu'**il comprend une ou des roulettes (38) près de la roue arrière (10).

6. Véhicule (28) selon la revendication 5, **caractérisé en ce que**, en position repliée et en station substantiellement verticale, il tient debout sans maintien extérieur, sur la ou les roulettes (38) et la roue arrière (10) .

7. Véhicule (28) selon l'une quelconque des revendications précédentes, **caractérisé en ce que**, à partir de la position dépliée de la colonne de direction, dès lors que les premier (16) et deuxième (18) axes sont débloqués, la rotation selon le premier axe (16) n'est possible que dans un sens et la rotation selon le deuxième axe (18) n'est possible que dans le sens inverse.

8. Véhicule (28) selon la revendication 7, **caractérisé en ce que**
la colonne de direction comprend une section inférieure (14); et **en ce que**
le seul sens possible de rotation de la section inférieure (14) par rapport au marchepied (2) est le sens inverse de celui de la rotation de la roue avant (6) lorsque le véhicule (28) avance.

9. Véhicule (28) selon l'une quelconque des revendications précédentes, **caractérisé en ce que**
la colonne de direction comprend une section supérieure (4); et **en ce que**
la section supérieure (4) comprend une fourche.

10. Véhicule (28) selon l'une quelconque des revendications précédentes, **caractérisé en ce que** la distance entre le sommet (20) de la colonne de direction et le deuxième axe (18) est supérieure à la distance entre le deuxième axe (18) et le premier axe (16).

11. Véhicule (28) selon l'une quelconque des revendications précédentes, **caractérisé en ce qu'**il comprend en outre des moyens pour forcer la rotation de la section supérieure (4) de la colonne de direction par rapport à sa section inférieure (14) et la rotation de la section inférieure (14) autour du premier axe (16) à avoir lieu de façon dépendante l'une de l'autre et à n'avoir lieu que dans des sens opposés.
